# EUROPÄISCHE PATENTSCHRIFT

(11) **EP 1 568 540 B1**
(45) Veröffentlichungstag und Bekanntmachung des Hinweises auf die Patenterteilung: **15.08.2007**
(21) Anmeldenummer: 04028456.4
(22) Anmeldetag: 01.12.2004
(51) Int. Cl.: B60P 7/08, B60R 7/02, B60R 5/04, B60R 22/18

(54) **Vorrichtung zum Verzurren von Gepäckteilen im Kraftfahrzeug**
Apparatus for fixation of baggage in a vehicle
Dispositif d'amarrage de Bagages dans un véhicule

(30) Priorität: 27.02.2004 DE 202004003237 U
(43) Veröffentlichungstag der Anmeldung: 31.08.2005
(73) Patentinhaber: YMOS GmbH, 55743 Idar-Oberstein (DE)
(72) Erfinder: Kley, Frank, Dipl. Ing., 55767 Gimbweiler (DE); Buschmeier, Konrad Dipl. Ing., 33154 Salzkotten (DE)
(74) Vertreter: Ostermann, Thomas

(56) Entgegenhaltungen:
- EP-A1- 1 413 503
- EP-A2- 1 123 838
- DE-A1- 10 228 046

## Beschreibung

Die Erfindung betrifft eine Vorrichtung zum Verzurren von Gepäckteilen im Kraftfahrzeug nach dem Oberbegriff des Patentanspruchs 1.

Aus der DE 100 43 641 C2 ist eine Vorrichtung zum Verzurren von Gepäckteilen im Kraftfahrzeug bekannt, bei der eine Öse über ein Verbindungsteil schwenkbar um eine Schwenkachse zu einem feststehenden Sockel gelagert ist. Die Öse weist üblicherweise eine Öffnung auf, durch die ein Riemen oder ein Gurt des Gepäckteils gezogen werden kann. Hierzu wird üblicherweise die Öse aus einer flachen Ruheposition in eine aufrechte Halteposition verbracht. Die bekannte Vorrichtung weist eine Raste auf, so dass die Öse in der Halteposition verharren kann. Nach Entriegeln der Raste wird die Öse selbsttätig mittels einer Rückstellfeder zurück in die liegende Ruheposition verbracht.

Aus der EP 1 123 838 A2 ist eine Vorrichtung zum Verzurren von Gepäckteilen im Kraftfahrzeug bekannt, die eine Öse aufweist, die lediglich um eine horizontale Schwenkachse schwenkbar an einem Sockel gelagert ist. Der Öse ist ein Feststellelement mit einer vorspringenden Rastnase zugeordnet, die mit einer Ausnehmung des Sockels derart zusammenwirkt, dass die Öse in einer aufrechten Halteposition fixierbar ist. Mittels einer Feder wird die Öse, sobald sie sich nicht in der einzigen festlegbaren Halteposition befindet, selbsttätig in die liegende Ruheposition verbracht. Nachteilig an der bekannten Vorrichtung ist, dass die Öse lediglich in einer einzigen Halteposition festlegbar ist und dass ein Verschwenken der Öse um eine senkrecht zur Schwenkachse verlaufenden Drehachse nicht möglich ist.

Aus der gattungsbildenden DE 102 28 046 A1 ist eine Vorrichtung zum Verzurren von Gepäckteilen im Kraftfahrzeug bekannt, die eine bügelförmige Öse umfasst. Die Öse ist um eine Schwenkachse und zum eine senkrecht zur Schwenkachse verlaufende Drehachse an einem Sockel gelagert. Zum verschwenken der Öse sind zwei Gelenkbolzen vorgesehen, die jeweils in einer Bohrung an einem Ende der Öse einerseits und in einer Bohrung eines zweiten Verbindungsteils andererseits gelagert sind. Die Gelenkbolzen dienen als erstes Verbindungsteil. Das zweite Verbindungsteil weist eine zentrale Bohrung auf, in der eine Befestigungsschraube derart an dem Sockel befestigt ist, dass das zweite Verbindungsteil zusammen mit der Öse um die Drehachse verdrehbar gelagert ist. Nachteilig an der bekannten Vorrichtung ist, dass lediglich Gelenkbolzen als erstes verbindungsteil vorgesehen sind, die keine Fixierung der Öse in einer aufrechten Halteposition ermöglichen. Zum Verzurren eines Gepäckteils ist es erforderlich, dass die Öse, die sich in einer Ausgangsstellung aufgrund ihres Eigengewichtes in einer liegenden Ruheposition befindet, von einer Bedienperson angehoben wird, während gleichzeitig ein Riemen bzw. ein Gurt des Gepäckteils an der Öse angelegt wird.

Aufgabe der vorliegenden Erfindung ist es, eine Vorrichtung zum Verzurren von Gepäckteilen im Kraftfahrzeug derart weiterzubilden, dass die Handhabbarkeit vereinfacht und der Bedienungskomfort verbessert wird.

Zur Lösung dieser Aufgabe weist die Erfindung in die Merkmale des Patentanspruchs 1 auf.

Ein Vorteil der Erfindung besteht darin, dass durch die zusätzliche orthogonale Drehbarkeit der Öse sich eine bedarfsgerechte automatische Ausrichtung der Öse einstellt. Dabei verstellt sich die Öse automatisch in Zugrichtung des Riemens oder Gurtes des Gepäckteiles, so dass sich keine unerwünschte Falte des Riemens bzw. des Gurtes bilden kann. Dadurch, dass die Drehachse orthogonal zu der Schwenkachse verläuft, kann die Variabilität der Öse im Einsatz vergrößert werden. Nach der Erfindung ist der Öse ein Feststellelement zugeordnet, mittels dessen die Öse in unterschiedlichen aufrechten Haltepositionen festgelegt werden kann. Vorteilhaft ergeben sich hierdurch mehrere Haltepositionen, vorzugsweise in einem spitzen oder stumpfen Winkelbereich, so dass nicht nur eine stufenlose Ausrichtung in einer horizontalen Ebene, sondern auch eine Ausrichtung auf die Zugrichtung des Riemens in einer vertikalen Ebene erfolgen kann. Das Feststellelement ist vorzugsweise auf dem als Bolzen ausgebildeten ersten Verbindungsteil gelagert und klemmend mit der Öse verbunden, so dass vorhandener Bauraum genutzt werden kann. Vorteilhaft kann auf eine Rückstellfeder verzichtet werden. Hierdurch kann darüber hinaus der Platzbedarf für das erste Verbindungsteil verringert werden.

Nach einer bevorzugten Ausführungsform der Erfindung ist ein für die Verdrehung der Öse erforderliches zweites Verbindungsteil flächig in einem Boden des Sockels angeordnet, so dass die Verdrehung der Öse platzsparend realisiert werden kann. Vorzugsweise weist das zweite Verbindungsteil eine Bohrung auf, in der ein Kopf einer Befestigungsschraube mit Spiel gelagert ist. Vorteilhaft dient die Befestigungsschraube zum einen zur lösbaren Befestigung des Sockels man einem Karosserieteil. Zum anderen dient die Befestigungsschraube zum Festlegen des zweiten Verbindungsteils an dem Sockel.

Ein Ausführungsbeispiel der Erfindung wird nachfolgend anhand der Zeichnungen näher erläutert.

Es zeigen:

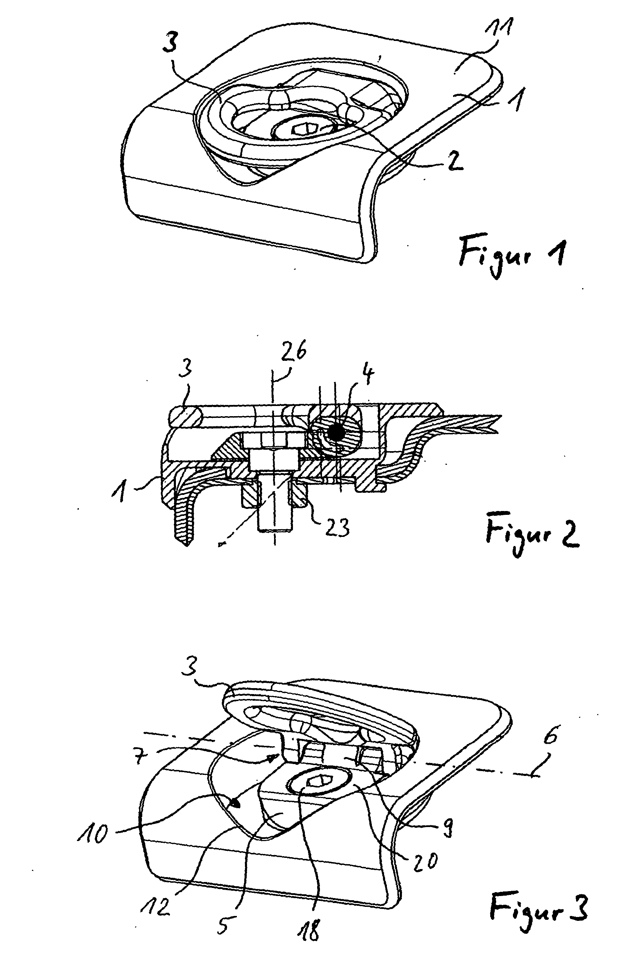

- Figur 1: eine perspektivische Darstellung einer erfindungsgemäßen Vorrichtung mit einer Öse in einer versenkten Ruhepositionen,
- Figur 2: einen Querschnitt durch die erfindungsgemäße Vorrichtung gemäß Figur 1,
- Figur 3: eine perspektivische Darstellung einer erfindungsgemäßen Vorrichtung mit der Öse in einer aufrechten Halteposition,

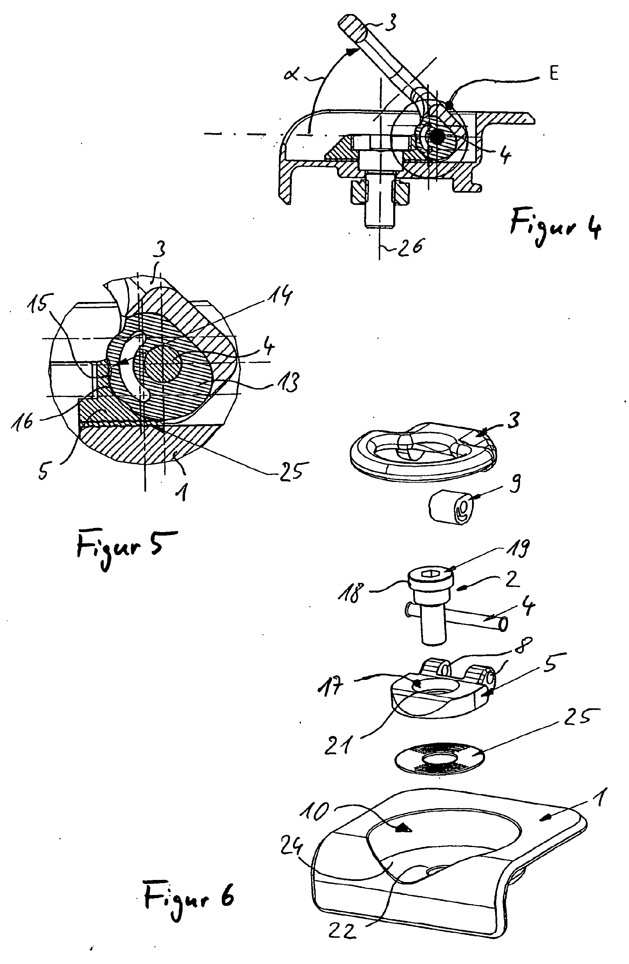

- Figur 4: einen Querschnitt durch die Vorrichtung gemäß Figur 3,
- Figur 5: eine vergrößerte Einzelheit E in Figur 4 und
- Figur 6: eine Explosionsdarstellung der erfindungsgemäßen Vorrichtung.

Die erfindungsgemäße Vorrichtung zum Verzurren von Gepäckteilen in Kraftfahrzeugen besteht im Wesentlichen aus einem Sockel 1, einer Befestigungsschraube 2, einer Öse 3, einem ersten Verbindungsteil 4 und einem zweiten O-förmigen Verbindungsteil 5.

Die bügelförmige Öse 3, um die ein nicht dargestellter Riemen oder Gurt des Gepäckteils herumgelegt wird, ist um eine horizontal verlaufende Schwenkachse 6 schwenkbar zu dem zweiten Verbindungsteil 5 bzw. dem Sockel 1 gelagert. Zu diesem Zweck ist das erste Verbindungsteil 4 als ein Bolzen ausgebildet, der sich durch zueinander fluchtende Gelenköffnungen 7 und 8 der Öse 3 bzw. des zweiten Verbindungsteils 5 erstreckt. In einem mittleren Bereich zwischen den Gelenköffnungen 8 des zweiten Verbindungsteils 5 ist ein hohlzylinderförmiges Feststellelement 9 angeordnet, mittels dessen die Öse 3 in einer Ruheposition, in der die Öse 3 in Ausnehmung 10 des Sockels 1 versenkt ist, sowie weiteren aufrechten Haltepositionen festgelegt werden kann. Die Tiefe der Ausnehmung 10 ist derart gewählt, dass die Öse 3 in der Ruheposition bündig zu einer Deckfläche 11 des Sockels 1 abschließt. Eine nasenförmige Ausbuchtung 12 der Ausnehmung 10 ermöglicht ein Erfassen der Öse 3 in der Ruheposition.

Das Feststellelement 9 ist als ein Kunststoffteil ausgebildet und weist eine Verstärkungsnase 13 auf, mit der sie klemmend an einer Innenseite der Öse 3 anliegt. Durch diese reibschlüssige Verbindung verdreht sich das Verstellelement 9 zusammen mit der Öse 3 von der Ruheposition in eine vorgegebene Halteposition und vice versa. Das Feststellelement 9 ermöglicht die Verstellung der Öse 3 in vorzugsweise drei Verstellpositionen (Halte-/ Ruheposition).

Das Feststellelement 9 weist an seiner Mantelfläche 16 eine Mehrzahl von axialen Vertiefungen 14 auf, die in einer entsprechenden Halteposition rastend mit einer Haltenase 15 des zweiten Verbindungsteils 5 zusammenwirken. Hierdurch kann die Öse 3 stufenförmig in vorgegebene Haltepositionen verschwenkt werden. Der Außendurchmesser des Feststellelementes 9 ist vorzugsweise derart gewählt, dass ein Verschwenken der Öse 3 mit geringem manuellen Kraftaufwand gegeben ist. Vorteilhaft kann die Öse 3 in Stufen in eine vorgegebene Halteposition verbracht werden, wobei ein Neigungswinkel α geneigt oder aufrecht in einem Winkelbereich von 0 bis 90° liegen kann. Dadurch, dass die Öse 3 in der Neigungsstellung über das Feststellelement 9 reibschlüssig an der Haltenase 15 gehalten ist, kann nach dem Anlegen des Riemens an die Öse 3 eine weitere Verstellung der Neigung in Abhängigkeit von der Zugrichtung des Riemens erfolgen. Es handelt sich somit um keine starre Festlegung der Halteposition, sondern um eine nachgiebige, wobei die für das Verharren in der Halteposition verantwortliche Haltekraft durch den Außendurchmesser der Mantelfläche 16 des Feststellelementes 9 vorgegeben sein kann.

Das Feststellelement 9 weist eine Bohrung auf, so dass es mit Spiel auf dem Bolzen 4 gelagert ist.

Das zweite Verbindungsteil 5 ist o-ringförmig ausgebildet und weist eine Aufnahme 17 auf, in der ein Kopf 18 der Befestigungsschraube 2 unter bündigem Abschluss einer Stirnseite 19 desselben mit einer Oberseite 20 des zweiten Verbindungsteils 5 abschließt. Die Befestigungsschraube 2 ermöglicht ein Befestigen des zweiten Verbindungsteils 5 sowie des Sockels 1 an einem nicht dargestellten Karosserieteil des Kraftfahrzeugs. Hierzu wird die Befestigungsschraube 2 nach dem Einsetzen in eine Bohrung 21 des zweiten Verbindungsteils 5 und in eine Bodenbohrung 22 Sockels 1 am freien Ende des Schaftes desselben mit einer Mutter 23 versehen. Zwischen dem zweiten Verbindungsteil 5 und einem Boden 24 des Sockels 1 ist vorzugsweise eine Befestigungsscheibe 25 vorgesehen. Die gewölbte Befestigungsscheibe 25 gewährleistet eine gleichmäßige Drehbewegung der Öse 3 bzw. des Feststellelementes 9 um die Schwenkachse 6 und verhindert eine Verschmutzung der Drehflächen des zweiten Verbindungsteils 5.

Die Bohrung 21 des zweiten Verbindungsteils 5 ist derart gewählt, dass das zweite Verbindungsteil 5 um die Längsachse der Befestigungsschraube 2 verdrehbar ist. Die Längsachse der Befestigungsschraube 2 bildet eine vertikale Drehachse 26, die senkrecht zu der Schwenkachse 6 steht. Vorteilhaft kann die Öse 3 somit in einer horizontalen Ebene verdreht werden, so dass beim Aufrichten der Öse 3 dieselbe in eine optimale Angreifposition zu der Wirkrichtung des Riemens des Gepäckteils bringbar ist. Nach Ausübung einer vom Riemen ausgehenden Haltekraft kann die Lage der Öse 3 sowohl um die Drehachse 26 als auch um die Schwenkachse 6 weiter verändert werden, so dass eine räumliche Nachführung der Öse 3 gewährleistet ist.

Die Öse 3 sowie das zweite verbindungsteil 5 sind vorzugsweise aus einem Zinkmaterial hergestellt. Das erste Verbindungsteil 4 ist vorzugsweise aus einem Stahlmaterial hergestellt. Das Feststellelement 9 ist vorzugsweise als ein Kunststoffspritzgießteil (POM) ausgebildet.

## Patentansprüche

1. Vorrichtung zum Verzurren von Gepäckteilen im Kraftfahrzeug, mit einem Sockel (1), der mit einem Karosserieteil des Kraftfahrzeugs fest verbunden ist, mit einer Öse (3), die mittels eines Verbindungsteils (4) an dem Sockel um eine Schwenkachse (6) schwenkbar gelagert ist, dass die Öse (3) über ein weiteres zweites Verbindungsteil (5) drehbar um eine senkrecht zur Schwenkachse (6) verlaufende Drehachse (26) verdrehbar gelagert ist, dass die Öse (3) um die Schwenkachse (6) schwenkbar zu dem zweiten Verbindungsteil (5) gelagert ist, dass das zweite Verbindungsteil (5) eine Bohrung (21) aufweist, in der ein Kopf einer Befestigungsschraube (2) zum Befestigen des Sockels (1) und des zweitenverbindungteils (5) an dem Karosserieteil mit Spiel angeordnet ist, wobei das zweite Verbindungsteil (5) um die die Drehachse (26) bildende Längsachse der Befestigungsschraube (2) verdrehbar ist, **dadurch gekennzeichnet, dass** das erste Verbindungsteil (4) als ein Bolzen (4) ausgebildet ist, der sich durch zueinander fluchtende Gelenköffnungen (7, 8) der Öse (3), und des zweiten Verbindungsteils (5) erstreckt, und dass der Öse (3) ein hohlzylinderförmiges Feststellelement (9) zugeordnet ist, das auf dem Bolzen (4) gelagert ist und das an der Mantelfläche (16) eine Mehrzahl von mit einer Haltenase (15) des zweiten Verbindungsteils (5) rastend zusammenwirkenden axialen Vertiefungen (14) aufweist, derart, dass die Öse (3) in Stufen in einer vorgegebenen Halteposition fixiert werden kann.

2. Vorrichtung nach Anspruch 1, **dadurch gekennzeichnet, dass** sich das zweite Verbindungsteil (5) flächig in einer Ausnehmung (10) des Sockels (1) erstreckt.

3. Vorrichtung nach Anspruch 1 oder 2, **dadurch gekennzeichnet, dass** das zweite Verbindungsteil (5) o-ringförmig ausgebildet ist.

4. Vorrichtung nach einem der Ansprüche 1 bis 3, **dadurch gekennzeichnet, dass** das Feststellelement (9) mit einer Verstärkungsnase (13) klemmend an der Öse (3) gehalten ist.

5. Vorrichtung nach einem der Ansprüche 1 bis 4, **dadurch gekennzeichnet, dass** das Feststellelement (9) als Kunststoffteil ausgebildet ist.

## Claims

1. Apparatus for fixation of baggage in a motor vehicle comprising a base member (1) firmly secured to a body part of the motor vehicle, an eyelet (3) which is by means of a connecting element (4) disposed on said base member in a manner permitting swivel movement about a swivel axis (6), wherein the eyelet (3) is by means of a second connecting element (5) arranged to permit swivel movement about a swivel axis (26) extending normal to said swivel axis (6), wherein said eyelet (3) is adapted to swivel about the swivel axis (6) in relation to the second connecting element (5), wherein the second connecting element (5) is provided with a bore (21) for the head of a fixing bolt (2) to engage in with play which bolt is used to attach the base member (1) and the second connecting element (5) to a part of the car body and wherein the second connecting element (5) is adapted to swivel about the longitudinal axis of the fixing bolt (2) which constitutes a swivel axis (26), **characterized by** the fact that the first connecting element (4) is a bolt which extends through aligning joint openings (7, 8) provided in the eyelet (3) and the second connecting element (5) and that a hollow cylindrical locking member (9) associated with said eyelet (3) is disposed on the bolt (4) which locking element comprises on a surface (16) a plurality of axial indentations (14) for snap engagement with a retainer nose (15) of the second connecting element (5) such as to enable stepwise fixation of the eyelet (3) in a predetermined holding position.

2. Apparatus according to Claim 1, **characterized by** the fact that the second connecting element (5) extends plainly in a recess (10) of the base member (1).

3. Apparatus according to Claim 1. or 2, **characterized by** the fact that the second connecting element (5) is in form of an O-ring.

4. Apparatus according to any of the preceding Claims 1 to 3, **characterized by** the fact that the locking element (9) is provided with a reinforcement nose member (13) for clamping engagement with the eyelet (3).

5. Apparatus according to any of the preceding Claims 1 to 4, **characterized by** the fact that the locking element (9) is made of a plastic material.

## Revendications

1. Dispositif d'amarrage de bagages dans un véhicule automobile, avec un socle (1) qui est relié fixement à une pièce de la carrosserie du véhicule automobile, avec un oeillet (3), qui est monté au socle, en pivotement autour d'un axe de pivotement (6), au moyen d'un élément de liaison (4), que l'oeillet (3) est monté en rotation autour d'un axe de rotation (26) s'étendant perpendiculairement à l'axe de pivotement (6), au moyen d'un deuxième autre élément de liaison (5), que l'oeillet (3) est monté en pouvant pivoter, par rapport à l'élément de liaison (5), autour de l'axe de pivotement (6), que le deuxième élément de liaison (5) présente un alésage (21) dans lequel est agencé, avec jeu, une tête d'une vis de fixation (2) pour la fixation du socle (1) et du deuxième élément de liaison (5) à la pièce de la carrosserie, le deuxième élément de liaison (5) pouvant tourner autour de l'axe longitudinal de la vis de fixation (2) qui forme l'axe de rotation (26),
**caractérisé en ce que**
le premier élément de liaison (4) est formé par un boulon (4) qui passe à travers des ouvertures d'articulation (7, 8) de l'oeillet (3) et du deuxième élément de liaison (5), en alignement l'une par rapport à l'autre, et **en ce qu'**à l'oeillet (3) est associé un élément de blocage (9) en forme de cylindre creux qui est monté sur le boulon (4) et qui présente, sur la surface extérieur (16), plusieurs cavités axiales (14) qui coopèrent par enclenchement avec un mentonnet de retenue (15) du deuxième élément de liaison (5), de sorte que l'oeillet (3) peut être fixé pas-à-pas dans une position d'arrêt prédéterminée.

2. Dispositif selon la revendication 1, **caractérisé en ce que** le deuxième élément de liaison (5) s'étend en nappe dans un évidement (10) du socle (1).

3. Dispositif selon revendication 1 ou 2, **caractérisé en ce que** le deuxième élément de liaison (5) est conçu en forme de joint torique.

4. Dispositif selon l'une des revendications 1 à 3, **caractérisé en ce que** l'élément de blocage (9) est maintenu en coincement sur l'oeillet (3), avec un taquet de renforcement (13).

5. Dispositif selon l'une des revendications 1 à 4, **caractérisé en ce que** l'élément de blocage (9) est réalisé en tant que pièce en matière synthétique.
